# EUROPEAN PATENT SPECIFICATION

(11) **EP 0 336 634 B1**
(45) Date of publication and mention of the grant of the patent: **24.02.1993**
(21) Application number: 89303090.8
(22) Date of filing: 29.03.1989
(51) Int. Cl.: G01V 5/00

(54) **Detection system for explosives**
Explosiv-Detektorensystem
Appareil de détection d'explosifs

(30) Priority: 31.03.1988 GB 8807813
(43) Date of publication of application: 11.10.1989
(73) Proprietor: Cogent Limited, London, EC4N 4TP (GB)
(72) Inventor: Allyson, Julian David, Abingdon (GB); Jamieson, Jeffrey Frank Sisson, Nr. Buckingham MK18 4JA (GB); Spackman, Ramon, Upton Nr. Didcot (GB); James, Gwilyn Dorien, Reading Road Harwell (GB)
(74) Representative: Calderbank, Thomas Roger

(56) References cited:
- EP-A- 0 295 429
- FR-A- 2 490 824
- US-A- 3 832 545

## Description

The present invention relates to a system for detecting explosives. It is particularly, but not exclusively, concerned with the detection of explosives in luggage in e.g. an airport security system.

Security in airports is now of great importance, and for this reason all baggage is inspected prior to it being loaded on an aeroplane. It is normal for hand luggage to be subject to X-ray investigation, but more difficulties are encountered with unaccompanied and non-cabin luggage because of the time that would be taken in inspecting each bag. Therefore, it is desirable to have a relatively efficient way of detecting undesirable objects in luggage. The detection of metal objects is not difficult and existing systems are known for that purpose. However, it is more difficult to detect explosives because they do not readily show up by magnetic or other electrical systems. It is known that explosives generally contain a higher amount of nitrogen than normal objects to be found in luggage, and therefore consideration has been given to methods for detecting excess amounts of nitrogen. When nitrogen is subject to neutrons, it emits gamma rays at predetermined frequencies, and by detection of such gamma rays, it is possible to determine the nitrogen concentration in a particular sample. Thus, if it is found that there is an excessive level of nitrogen in any particular part of an item of luggage, then that item becomes suspect, and therefore should be subject to further investigation.

One proposal for investigating explosive by means of neutron analysis is disclosed in GB 1392169. In this document, an item of luggage is positioned within an enclosure, the walls of which contain gamma ray detectors. At one point in the walls, there is a neutron source, which subjects the item of luggage within the enclosure to neutrons, and the gamma rays generated are then detected by the gamma ray detectors. In GB 1392169 the gamma ray detectors are axially elongate, so that their maximum detection efficiency is axial, and so they may be considered as detecting gamma rays from only a limited area of the item of luggage.

It would appear, in GB 1392169, that the item of luggage must be stationary during investigation, since any movement will mean that the detectors do not detect a specific part of the item. However, this means that the speed of luggage processing is relatively slow with the movement of the luggage being intermittent, and this is a disadvantage. Furthermore, in GB 1392169, the fact that there is only a single source means that there is a great variation in separation of source and detectors, and this causes a corresponding variation in the detection efficiency of each detector. Those detectors further away from the source are much less likely to detect high concentrations of nitrogen. Thus, the system is prone to error in that a high concentration of nitrogen (i.e. the presence of explosive) may not be detected if it is remote from the source when the item of luggage is in position, or alternatively that there is a greater risk of mis-detection at parts of the item close to the source.

Thus, the present invention seeks to be able to detect high concentrations of nitrogen in moving luggage.

According to a first aspect of the present invention, there is provided an apparatus for detecting if explosive is present in an article comprising:
a source of neutrons,
a plurality of gamma ray detectors,
transport means for moving the article adjacent to the source and detectors such that the article is subject to neutrons from the source and generates gamma rays detected by the detectors, the detectors being adapted to generate outputs in dependence on the detected gamma rays, wherein the neutron source comprises a plurality of sources, the sources being arranged in at least one linear array transverse to the direction in which the transport means is adapted to move the article, and the apparatus further includes analysis means for generating signals corresponding to the output of each detector divided into a series of time intervals such that each time interval corresponds to the movement of only a part of the article past the detectors and sources and for investigating those signals to detect if explosives are present in the article.

According to a second aspect of the present invention there is provided a method of detecting if explosive is present in an article, comprising
moving the article adjacent a source of neutrons and a plurality of gamma ray detectors, whereby the article is subject to neutrons from the source and generates gamma rays, which gamma rays are detected by the detectors, the detectors generating outputs in dependence on the detected gamma rays, wherein
said neutron source comprises a plurality of sources arranged in at least one linear array transverse to the direction of movement of the article, and
the method further comprises generating signals corresponding to the output of each detector divided into a series of time intervals such that each time interval corresponds to the movement of only a part of the article past the detectors and sources, and investigating those signals to detect if explosives are present in the article.

It should also be noted that EP-A-0295429 discloses an apparatus for detecting if an explosive is present in an article comprising:
a source of neutrons,
a plurality of gamma ray detectors,
transport means for moving the article adjacent to the source and detectors such that the article is subject to neutrons from the source and generates gamma rays detected by the detectors, the detectors being adapted to generate outputs in dependence on the detected gamma rays, in which there is also analysis means for generating signals corresponding to the output of each detector divided into a series of time intervals such that each time interval corresponds to the movement of only a part of the article past the detectors and sources and for investigating those signals to detect if an explosive is present in the article. This document was published after the priority date of the present invention and so is prior art only under Article 54(3) of the European Patent Convention.

Preferably, the detectors are arranged in one or more lines transverse to the direction of movement of the luggage, and thus a series of "windows" of the item of luggage are obtained, extending across it (due to the transverse positioning of the detectors) and spaced along it due to the time chopping of the detector outputs.

In general, only a single line of detectors is used, but it may be desirable to provide a plurality of lines for greater efficiency, since the results from the two lines may then be compared.

With such a system, there need not be a great variation in the separation of the detectors from the source(s) so that the results from different detectors are of a similar order. Of course, detectors further from the source have a lower detection efficiency, but unlike the system proposed in UK 1392169, the use of a linear array of detectors proximate the source(s) reduces this effect to a minimum. Of course, it would be possible virtually to eliminate this by providing the same number of sources as there are detectors, but this is expensive and thus a compromise can be reached if there are approximately three detectors per source.

As discussed above, the present invention results in a series of "windows" extending both laterally and longitudinally of the item of luggage. For this reason, it is important that the item of luggage be flat as it is passed over the detectors, but this can be resolved easily by placing the luggage on a conveyor belt which passes over the detectors. This has the further advantage that the distance from the detectors to the item of luggage is fixed, thereby increasing the reliability of measurement. In GB 1392169, there may be a variation in the distance between the item of luggage and the detectors, thereby varying the detection efficiency.

Of course, there will be a variation in efficiency through the thickness of the luggage perpendicular to the conveyor on which it is moved. For normal luggage this is not a problem as the distances involved are small. However, if desired, it may be necessary to place a further series of source(s) and/or detectors above the conveyor, but then unless the sources and detectors of that further series are movable, the distance between them and the item of luggage will vary.

Once the series of "windows" of the item of luggage has been obtained, it is then analysed. Some types of explosive have high nitrogen contents (e.g. 37% or more) and these are relatively easy to detect. Other types of explosive, however, may have a lower nitrogen content (e.g. 18%), and this is not markedly greater than the nitrogen content in e.g. wool, which has a nitrogen content of around 13%. Thus, it is important that the detection system be accurately calibrated so that it does not produce spurious detection on normal items of clothing, although in general the density of explosive is higher than woollen goods, and so the detection efficiency is relatively greater than the difference in nitrogen content would suggest. In fact, it is believed that even the most accurate system will have an error rate of about 1% for such low nitrogen explosives, but by arranging the system to err on the side of too much detection, rather than too little, this is acceptable, since that 1% of errors can then be eliminated by other means.

The present invention finds particular applicability in a security system containing a plurality of different types of detection apparatus. Thus, an item of luggage may first be subjected to nitrogen detection via neutrons, as discussed above. If the results are that the level of nitrogen is below that thought to be a risk, the item of luggage may then be passed to a metal detector, such as known magnetic and/or eddy current detectors. If, on the other hand, the nitrogen level is thought to be too high, the item of luggage may then be passed to a high definition X-ray system for further study.

After the series of "windows" has been obtained, the first step of their analysis is to check whether any one of them has too high a nitrogen level. Care must be taken here because peripheral parts of an item of luggage will generally produce a lower count than elsewhere, and therefore compensation must be applied to the measurements of such peripheral parts. Furthermore, it is desirable that the "windows" are analysed not only one-by-one, but also by looking at any two adjacent "windows". It may be that an explosive has "bridged" two "windows" and although neither may record excessive amounts of nitrogen individually, it may be that the two adjacent detectors will show an excessive amount, in combination. Indeed, it would be possible to analyse groups of three or more "windows", but the gain in detection efficiency is limited, and a much greater amount of processing is needed.

The length of the time chopping of the detector outputs, to obtain the "windows" may be varied. In a simple system, "windows" of e.g. 0.7 to 1.2 seconds may be suitable with a conveyor belt moving at 10 cms⁻¹. However, in a further development the chopping times may be made much smaller e.g. 0.15, and then the windows may be analysed in groups. The detection efficiency is believed to be dependent on the length of the time chopping, and therefore it may be possible to vary that length (by looking at a selected number of the 0.1 s "windows") thereby to maximise the detection efficiency.

With the neutron source positioned below a conveyor belt carrying the items of luggage, it may be desirable to place a neutron detector above the conveyor to detect any unacceptable changes in the neutron flux.

Embodiments of the invention will now be described in detail, by way of example, with reference to the accompanying drawings, in which:
Fig. 1 shows a schematic view of a security system employing a detector according to the present invention;
Fig. 2 shows a general view of a detection system according to the present invention;
Fig. 3 shows a schematic cross-sectional view along the line A-A in Fig. 1;
Fig. 4 shows a variation on the view shown in Fig. 3;
Fig. 5 shows a detail of Fig. 2;
Fig. 6 shows a schematic view of the detection "windows" obtained using the system of the present invention;
Fig. 7 shows an arrangement for positioning the neutron sources used in the present invention; and
Fig. 8 shows the change of detection efficiency with distance.

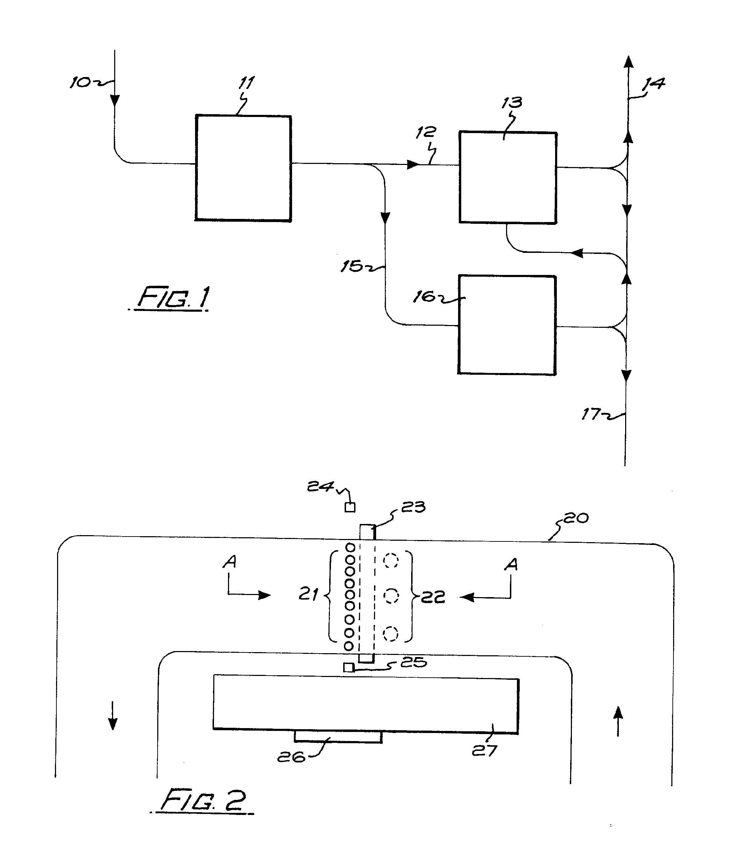

Referring first to Fig. 1, a security system for e.g. an airport has several different types of detectors for studying luggage. Thus, for example, an item of luggage is passed via a conveyor 10 into a nitrogen detection apparatus 11 which will be discussed in more detail later. That apparatus 11 detects whether there is an excessive amount of nitrogen, corresponding to the presence of an explosive, in any part of the item of luggage. If the nitrogen levels are acceptable, the item of luggage is then passed via a conveyor belt 12 to a metal detector 13. That metal detector 13 may be of known type, e.g. a magnetic and/or eddy current detector. If the results of that investigation do not reveal anything of danger, the item of luggage may then be returned to its owner or sent for loading to an aeroplane, via conveyor 14.

Returning now to the nitrogen detection apparatus 11, if this detects excessive amounts of nitrogen, in the item of luggage, the item may then be passed via a conveyor 15 to a known high definition X-ray apparatus 16. This allows security personnel to inspect the interior of the item of luggage. Preferably, there is some means for presenting the results of the nitrogen detection apparatus 11 at the X-ray apparatus 16, so that the operator of X-ray apparatus may have an indication where in the item of luggage the nitrogen content is high. This could be by way of a hard-copy print-out of the results of the nitrogen detection apparatus 11, which is then passed with the luggage to the X-ray apparatus 16, but preferably an electronic system is provided which gives a display of the results of the nitrogen detection apparatus 11 adjacent the display of the X-ray study of the item of luggage by the X-ray apparatus 16. For example, the two studies may be presented on adjacent or superimposed screens with regions of high nitrogen being emphasized.

Thus, the operator of the X-ray system can study the areas of concern relatively quickly. The use of such an electronic system for displaying the results of the nitrogen detection has the advantage that the display may be timed to co-incide with the movement of the luggage along the conveyor belt 15, which overcomes the disadvantage of hard-copy, namely that it must be kept with the corresponding item of luggage at all times. If, following the X-ray investigation, the luggage is found to be safe, it may be returned to the conveyor 14 or may be first passed to the metal detector 13 if appropriate (this should not normally be necessary because any metal object would appear in the X-ray display). If, however, it is not found to be safe then it may be passed via further conveyor 17 to a secure site.

In general, with such a system, the metal detector 13 and the X-ray apparatus 16 may be of known construction. The nitrogen detection apparatus 11, however, will now be discussed.

Referring then to Fig. 2, the nitrogen detection apparatus according to the present invention comprises a conveyor with a belt 20 which passes items of luggage over a line of gamma ray detectors 21, placed adjacent corresponding neutron sources 22. The detectors 21 and sources 22 may be placed very close to the underside of the belt 20, and hence close to the items of luggage on the belt 20. As illustrated, lead shielding 23 may be provided between the sources 22 and the detectors 21, to prevent gamma rays passing directly to the detectors 21 from the sources 22. Typically the source is based on ²⁵²Cf, which generates neutrons which, in turn, generate a 10.8 MeV gamma ray from the reaction ¹⁴N (n, ) ¹⁵N. The detectors are preferably scintillators, e.g. NaI scintillators, which have a detection window adjusted to detect a gamma ray of at least 9.5 MeV.

Means, e.g. optical source and detector 24,25 may be provided to detect the presence of luggage on the conveyor 20 by the breakage of a beam between the source and detector 24,25, and so activate the analysis of the detector outputs. Preferably, that analysis apparatus, together with a suitable display, is provided at a position 26 remote from the sources and detectors, and preferably separated from them by shielding 27. Thus, an operator may stand adjacent the analysis and display apparatus 26, but be shielded from the neutrons, etc., by the shielding 27. Further shielding may be provided above and below the conveyor 20, by providing suitable moderator material, and moderation around the source will also enhance the number of neutrons available for nitrogen detection.

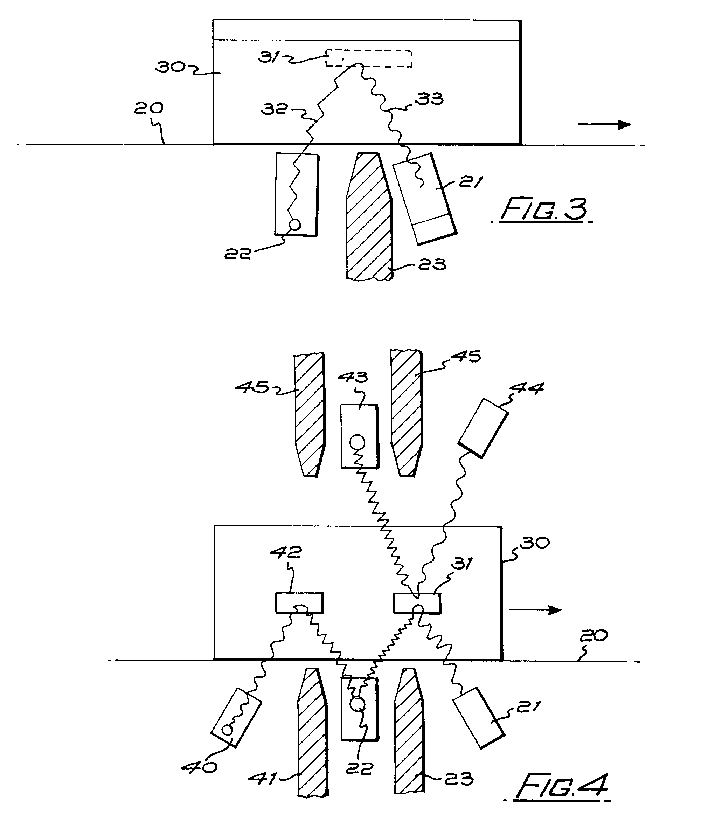

Fig. 3 shows the arrangement of detectors 21 and sources 22 in more detail. As can be seen in that figure, an item of luggage 30 containing explosive 31 is passed on the conveyor 20 above the detectors 21 and source 22. The source 22 emits neutrons 32 which, when they interact with the nitrogen in the explosive 31, produce gamma rays 33 which are detected by the gamma ray detector 21. This gamma ray detector may be an NaI scintillator, or other known gamma ray detector. It has been found that the detectors operate with maximum efficiency when the gamma ray source (i.e. the explosive) is directly above the source; this seems true even when the elongate detectors described in GB 1392169 are not used.

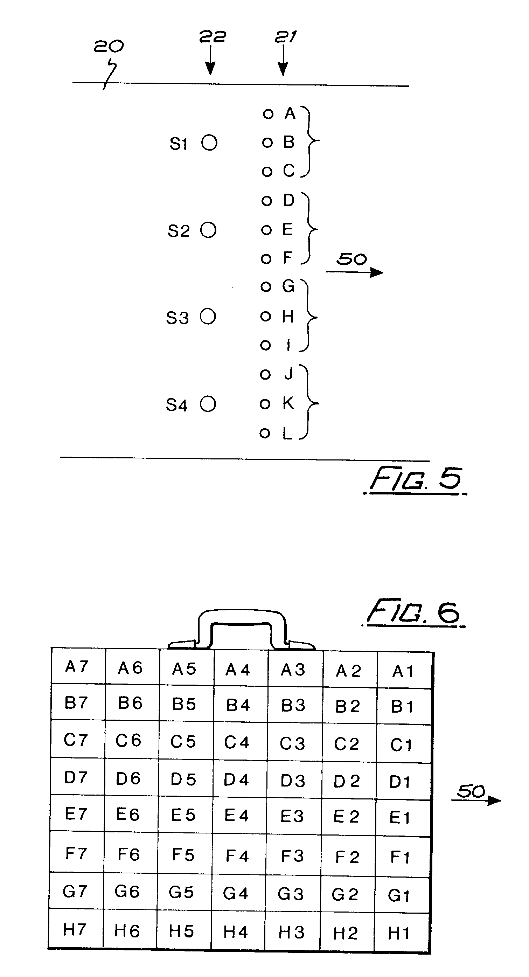

As illustrated in Figs. 2 and 3, there is a single line of detectors below the conveyor belt 20. However, as shown in Fig. 4, a second line of detectors 40 may be provided, again separated from the source 22 by suitable shielding 41. This will then detect further explosive 42 in the item of luggage 30. Of course, it is not likely that there will be two separate pieces of explosive 31,42 in the luggage. However, it can be seen that movement of the explosive 42 above the sources 22 and detectors 40,21, moves the explosive 42 to the position of explosive 31 in Fig. 4, so that two separate measurements of the nitrogen concentration in the item of luggage 30 are determined. The two may then be compared to improve the accuracy of the detection. By taking correct account of the time correlation the results may be compared and interpreted jointly.

Fig. 5 shows the preferred source/detector arrangement. If expense were not a consideration, it would be desirable to provide as many sources as there were detectors, so that the distance between the sources and the detectors would be the same in all cases. However, the cost means that the number of sources must be limited and therefore three or more, preferably four, sources S1,S2,S3,S4 (corresponding to sources 22 in Figs. 2 to 4) are provided extending transversely across the conveyor belt 20. Adjacent thereto, but separated by suitable shielding (not shown in Fig. 5), is a corresponding line of detectors 21. It is found that suitable results are obtained if three detectors are provided for each source, so that detectors A,B,C are primarily influenced by source 51, detectors D,E and F primarily influenced by source S2, detectors G,H,I primarily influenced by source S3, and detectors J,K,L primarily influenced by source S4. In fact, source S1 will have a small effect on detectors D,E,F, etc. which effect will decrease with distance. The effect of this on detection efficiency can be determined for each detector A to L and suitable compensation can then be made within the processing of the detector outputs.

Of course, the present invention is not limited to the use of three detectors per source. However, the line of detectors 21 should extend the full way across the conveyor belt 20 (so that the position of the item of luggage on the conveyor belt is immaterial), and a balance must be reached between closeness of detector spacing and increasing cost as the number of detectors increases.

Now imagine an item of luggage, such as a suitcase, passes over the array of sources 22 and detectors 21 in the direction of arrow 50. When the luggage breaks the beam between photosource and detector 25,26 in Fig. 2, the system starts to look at the outputs of the detectors. Each detector will have a primary detection area (the area where its detection efficiency is maximum) corresponding to a strip extending along the suitcase in the direction of arrow 50. There will be a plurality of such strips across the suitcase (transverse to the arrow 50) the number of which will be determined by the number of detectors over which the suitcase passes. This number will be determined by the spacing of the detectors, and by the width of the suitcase.

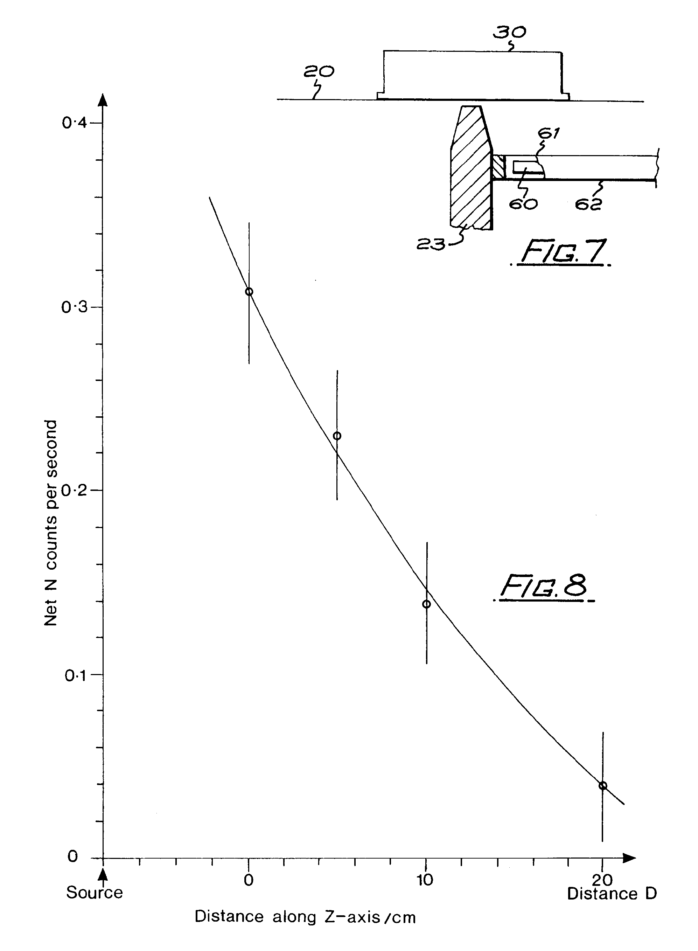

If the output of the detectors was simply summed as the suitcase passed over the detectors, then the results would not be useful. However, as discussed above, the present invention "chops" the signals from the detectors so that each detection strip is divided into a plurality of sections, the length of which is determined by the speed of movement of the suitcase, and the duration of the time chopping of the detector outputs. The result is shown in Fig. 6, which shows the pattern of detection areas ("windows") as the suitcase passes over the detector array shown in Fig. 5. It is assumed here that the width of the suitcase is such that it extends from detector A to detector H; a wider suitcase would have more strips and a narrower suitcase less.

Thus, in Fig. 6, windows A1,A2 ... A7 correspond to the windows formed by the time chopping of the output of detector A, windows B1,B2 ... B7 correspond to those formed by the time chopping of the output of detector B, etc. As can be seen, an array of such windows is thus formed over the suitcase. As mentioned above, the width of such windows, i.e. in the direction transverse to the arrow 50 is determined by the spacing of the detectors 21. A suitable value for this spacing is 7 to 9 cm, based on a detector with a diameter of 3 inches (7.5 cm) a length (perpendicular to the belt 20) also of 3 inches (7.5 cm). The length of each window, in the direction of arrow 50, depends on the speed of the belt 20 and the time chopping of the detector outputs. Thus, for example, if the belt 20 moves at 10 cms⁻¹, then a time chopping interval of 0.7 s to 1.2 s gives satisfactory results. For convenience, this figure may be chosen so that the windows are approximately square.

The movement of the trailing edge of the suitcase from between the photosource and detector 24,25 then terminates the detector output investigation. It may be, of course, that this does not correspond to the end of the time interval of the chopping. In this case, if e.g. 0.8 or more of the time interval has elapsed, the resulting partial window is considered independently, although a suitable adjustment is made. If, however, less than 0.8 of the time interval has elapsed, then the partial window is considered together with the preceding window, again with a suitable correction.

Then, the time-chopped outputs of the detectors are analysed (in the analysing device 26) taking into account the corrections necessary for peripheral windows as discussed above. A high number of gamma rays detected within any one window corresponds to a high nitrogen concentration and, as discussed above, since the maximum detection efficiency is achieved directly above the detectors, a high figure in each window will correspond to a high nitrogen content in the corresponding part of the suitcase shown in Fig. 6.

Furthermore, it is desirable if the system also looks for relatively high detection rates in any two adjacent windows, including diagonals. Thus, for example, not only is the number of detection events for windows B2 considered alone, but also in combination with A1,B1,C1,C2,C3,B3,A3, and A2. This increases the detection efficiency. Of course, it would be possible to consider further combinations, e.g. lines of 3 windows, but there is an increase in the amount of processing needed. It is also found that the detection efficiency is affected by the length of each window, and this varies depending on the type of explosive present. Therefore, it is also possible greatly to reduce the length of the windows, e.g. by chopping the detector outputs at a time interval of 0.1 s or less. Then, several such short windows may be summed before further analysis is carried out, the number of short windows in the sum being selected in dependence on the detection efficiency. Indeed, this system could also operate by processing several different sums of such short windows, to produce a series of measurements, each optimised to a particular type of exposive. Of course, this is more complex to achieve, but may produce a more efficient detector.

For safety, it is desirable that there are means for removing the radioactive sources from the proximity of the conveyor belt 20 when they are not needed. An arrangement for this is shown in Fig. 7, which corresponds generally to the view shown in Fig. 3, except the source 60 is mounted in a pellet 61 which is positioned within a duct 62. By pumping air into, or extracting air from the duct 62, it is possible to move the pellet 61 along the duct into the position shown in Fig. 7, corresponding to the operational position, or to a position remote from the conveyor 20.

One problem of use of gamma ray generation by bombardment of nitrogen with neutrons is that the detection rate decreases significantly with increasing distance between the nitrogen and the detector. This is shown in Fig. 8, in which the number of counts N were investigated as a function of vertical distance D away from the belt on a high nitrogen sample. In fact, that sample was 0.616 kg urea, with a 9.2 µg ²⁵²Cf source and a 3 x 3 inch NaI(Tl) scintillator detector. It can be seen that the detection efficiency decreases significantly over a distance of 20 cm, which corresponds approximately to a normal suitcase thickness. Therefore, if the explosive happens to be at a position in the suitcase far from the conveyor 20, the detection efficiency will be reduced. To overcome this problem, it would be advantageous to place a second set of sources and detectors in an array corresponding to Fig. 5, but arranged above the conveyor belt so that it produced a measurement downwardly into the item of luggage. This is shown in Fig. 4 with source 43, detectors 44, and shielding.

However, the problem with this is that the separation of that detector/source array from the item of luggage would not be fixed, which could result in an incorrect measurement. The only way of resolving this problem is to have that array movable perpendicular to the belt 20, with a mechanism to bring it into contact with the upper surface of the item of luggage, but this is difficult mechanically. However, for large items of luggage, it may be necessary.

It should also be noted that it is desirable that the conveyor, and other parts of the system, are made of materials with a low nitrogen content, to reduce the background of the detectors.

Thus, the present invention proposes an explosive detection system in which the luggage is bombarded with neutrons from one or more sources, and the gamma rays generated are detected by detectors, the outputs of which are time-chopped to produce a series of windows extending in an array over the luggage. If any of the windows, whether alone, or in combination, indicate a high nitrogen measurement, there is then the risk of explosive being present and the luggage can then be checked by other means. Since the detection of high nitrogen contents can be relatively automatic, the system may thus act as an initial screening stage of a security system, so that detailed investigation need only be made manually where there appears to be a risk present.

## Claims

1. An apparatus for detecting if explosives are present in an article (30) comprising:
a source (22) of neutrons (32),
a plurality of gamma ray detectors (21),
transport means (20) for moving the article adjacent to the source (22) and detectors (21) such that the article (30) is subject to neutrons (32) from the source and generates gamma rays (33) detected by the detectors (21), the detectors (21) being adapted to generate outputs in dependence on the detected gamma rays,
characterised in that:
said neutron source comprises a plurality of sources (22), the sources (22) being arranged in at least one linear array transverse to the direction in which the transport means (20) is adapted to move the article, and the apparatus further includes analysis means (26) for generating signals corresponding to the output of each detector (21) divided into a series of time intervals such that each time interval corresponds to the movement of only a part of the article past the detectors and sources and for investigating those signals to detect if explosives are present in the article.

2. An apparatus according to claim 1, wherein the plurality of detectors (21) is arranged in at least one linear array transverse to the direction in which the transport means (20) is adapted to move the article.

3. An apparatus according to any one of the preceding claims wherein at least a first array of sources (22) and a first group of the detectors (21) are located on one side of the transport means (20), and at least a second array of sources (43) and at least a second group of the detectors (44) are located an another side of the transport means such that the transport means (20) is adapted to move the article (30) between the first and second arrays of sources (22,43).

4. An apparatus according to any one of the preceding claims, wherein the analysis means (26) is adapted to compare at least two of said signals.

5. An apparatus according to any one of the preceding claims, wherein the analysis means (26) is adapted to vary the duration of the time intervals.

6. A detection system for investigating articles comprising
an apparatus (11) according to any one of the preceding claims,
a metal detector (13) for detecting the presence of metal in the article,
an X-ray system (16) for investigating the article with X-rays, and
means (12,14,15,17) for transporting the article between the apparatus, the metal detector, and the X-ray system.

7. A method of detecting if explosive is present in an article (30), comprising
moving the article (30) adjacent a source (22) of neutrons (32) and a plurality of gamma ray detectors (21), whereby the article is subject to neutrons (32) from the source and generates gamma rays (33), which gamma rays (33) are detected by the detectors (21), the detectors (21) generating outputs in dependence on the detected gamma rays (33);
characterised in that:
said neutron source comprises a plurality of sources (22) arranged in at least one linear array transverse to the direction of movement of the article, and
the method further comprises generating signals corresponding to the output of each detector divided into a series of time intervals such that each time interval corresponds to the movement of only a part of the article past the detectors and sources, and investigating those signals to detect if explosives are present in the article (30).

8. A method according to claim 7, wherein the investigation of the signals includes comparison of at least two of the signals.

## Patentansprüche

1. Vorrichtung zum Bestimmen, ob Sprengstoffe in einem Gegenstand (30) vorhanden sind, umfassend:
eine Quelle (22) für Neutronen (32),
eine Vielzahl von Gammastrahlendetektoren (21),
Transporteinrichtungen (20) zum Bewegen des Gegenstands angrenzend an die Quelle (22) und Detektoren (21), sodaß der Gegenstand (30) Neutronen (32) von der Quelle unterworfen ist und Gammastrahlen (33) erzeugt, die von den Detektoren (21) festgestellt werden, wobei die Detektoren (21) so ausgebildet sind, daß sie Outputs in Abhängigkeit von den festgestellten Gammastrahlen erzeugen,
dadurch gekennzeichnet, daß
die genannte Neutronenquelle eine Vielzahl von Quellen (22) umfaßt, wobei die Quellen (22) in zumindest einer linearen Anordnung quer zur Richtung angeordnet sind, in der die Transporteinrichtung (20) den Gegenstand bewegen soll, und die Vorrichtung weiters Analyseeinrichtungen (26) einschließt, um Signale zu erzeugen, die dem Output eines jeden Detektors (21), geteilt in eine Reihe von Zeitintervallen, entsprechen, sodaß jedes Zeitintervall der Bewegung von nur einem Teil des Gegenstands an den Detektoren und Quellen vorbei entspricht, und um diese Signale zu untersuchen, um zu bestimmen, ob Sprengstoffe im Gegenstand vorhanden sind.

2. Vorrichtung nach Anspruch 1, worin die Vielzahl an Detektoren (21) in zumindest einer linearen Reihe quer zu der Richtung angeordnet ist, in der die Transporteinrichtung (20) den Gegenstand bewegen soll.

3. Vorrichtung nach einem der vorhergehenden Ansprüche, worin sich zumindest eine erste Anordnung von Quellen (22) und eine erste Gruppe von Detektoren (21) auf einer Seite der Transporteinrichtung (20) befinden, und zumindest eine zweite Anordnung von Quellen (43) und zumindest eine zweite Gruppe von Detektoren (44) sich auf einer anderen Seite der Transporteinrichtung befinden, sodaß die Transporteinrichtung (20) so ausgebildet ist, daß sie den Gegenstand (30) zwischen der ersten und der zweiten Anordnung von Quellen (22,43) bewegt.

4. Vorrichtung nach einem der vorhergehenden Ansprüche, worin die Analyseeinrichtung (26) so ausgebildet ist, daß sie zumindet zwei der genannten Signale vergleicht.

5. Vorrichtung nach einem der vorhergehenden Ansprüche, worin die Analyseeinrichtung (26) so ausgebildet ist, daß sie die Dauer der Zeitintervalle variiert.

6. Bestimmungssystem zum Untersuchen von Gegenständen, umfassend:
eine Vorrichtung (11) nach einem der vorhergehenden Ansprüche,
einen Metalldetektor (13) zum Nachweisen der Gegenwart von Metall im Gegenstand,
ein Röntgenstrahlsystem (16), um den Gegenstand mit Röntgenstrahlen zu untersuchen, und
Einrichtungen (12,14,15,17), um den Gegenstand zwischen der Vorrichtung, dem Metalldetektor und dem Röntgenstrahlsystem zu transportieren.

7. Verfahren, um zu bestimmen, ob Sprengstoff in einem Gegenstand (30) vorhanden ist, umfassend
das Bewegen des Gegenstands (30) angrenzend an eine Quelle (22) für Neutronen (32) und eine Vielzahl von Gammastrahlendetektoren (21), wodurch der Gegenstand Neutronen (32) von der Quelle unterworfen wird und Gammastrahlen (33) erzeugt, welche Gammastrahlen (33) von den Detektoren (21) bestimmt werden, wobei die Detektoren Outputs in Abhängigkeit von den festgestellten Gammastrahlen (33) erzeugen;
dadurch gekennzeichnet, daß
die genannte Neutronenquelle eine Vielzahl von Quellen (22) umfaßt, die in zumindest einer linearen Anordnung quer zur Bewegungsrichtung des Gegenstands angeordnet sind, und
das Verfahren weiters das Erzeugen von Signalen umfaßt, die dem Output eines jeden Detektors, geteilt in eine Reihe von Zeitintervallen, entsprechen, sodaß jedes Zeitintervall der Bewegung von nur einem Teil des Gegenstand an den Detektoren und Quellen vorbei entspricht, und das Untersuchen dieser Signale, um festzustellen, ob Sprengstoffe im Gegenstand (30) vorhanden sind.

8. Verfahren nach Anspruch 7, worin die Untersuchung der Signale den Vergleich von zumindest zweien der Signale umfaßt.

## Revendications

1. Appareil pour détecter si des explosifs sont présents dans un article (30) comprenant:
une source (22) de neutrons (32),
une pluralité de détecteurs des rayons gamma (21),
un moyen de transport (20) pour déplacer l'article adjacent à la source (22) et des détecteurs (21) de sorte que l'article (30) est soumis aux neutrons (32) de la source et produit des rayons gamma a (33) détectés par les détecteurs (21), les détecteurs (21) étant aptes à produire des sorties en fonction des rayons gamma a détectés,
caractérisés en ce que:
ladite source de neutrons comprend une pluralité de sources (22), les sources (22) étant disposées suivant au moins une rangée linéaire transversalement à la direction dans laquelle le moyen de transport (20) est apte à déplacer l'article, et l'appareil comprend en outre des moyens d'analyse (26) pour produire des signaux correspondant à la sortie de chaque détecteur (21) divisée une série d'intervalles de temps de sorte que chaque intervalle de temps correspond au déplacement d'une partie seulement de l'article devant les détecteurs et sources et pour examiner ces signaux afin de détecter si des explosifs sont présents dans l'article.

2. Appareil selon la revendication 1, dans lequel la pluralité des détecteurs (21) est disposée suivant au moins une rangée linéaire transversalement à la direction dans laquelle le moyen de transport (20) est apte à déplacer l'article.

3. Appareil selon l'une des revendications précédentes, dans lequel au moins une première rangée de sources (22) et un premier groupe de détecteurs (21) sont localisés sur un côté du moyen de transport (20), et au moins une deuxième rangée de sources (43) et au moins un deuxième groupe de détecteurs (44) sont localisés sur un autre côté du moyen de transport de sorte que le moyen de transport (20) est apte à déplacer l'article (30) entré les première et deuxième rangées de sources (22, 43).

4. Appareil selon l'une des revendications précédentes, dans lequel les moyens d'analyse(26) sont aptes à comparer au moins deux desdits signaux.

5. Appareil selon l'une des revendications précédentes, dans lequel les moyens d'analyse (26) sont aptes à modifier la durée des intervalles de temps.

6. Système de détection pour examiner des articles comprenant
un appareil (11) conformément à l'une des revendications précédentes,
un détecteur de métal (13) pour détecter la présence de métal dans l'article,
un système de rayons X (16) pour examiner l'article avec des rayons X, et
des moyens (12, 14, 15, 17) pour transporter l'article entre l'appareil, le détecteur de métal et le système de rayons X.

7. Procédé pour détecter si un explosif est présent dans un article (30), comprenant
le déplacement de l'article (30) adjacent à une source (22) de neutrons (32) et une pluralité de détecteurs des rayons gamma (21), par quoi l'article est soumis à des neutrons (32) de la source et produit des rayons gamma (33), ces rayons gamma (33) sont détectés par les détecteurs (21), les détecteurs (21) produisent des sorties en fonction des rayons gamma a détectés (33) ;
caractérisés en ce que ladite source de neutrons comprend une pluralité de sources (22) disposées suivant au moins une rangée linéaire transversalement à la direction de déplacement de l'article, et
le procédé comprend en outre la production de signaux correspondant à la sortie de chaque détecteur divisée en une série d'intervalles de temps de sorte que chaque intervalle de temps correspond au déplacement d'une partie seulement de l'article devant les détecteurs et sources, et l'examen de ces signaux pour détecter si des explosifs sont présents dans l'article (30).

8. Procédé selon la revendication 7, dans lequel l'examen des signaux comprend la comparaison d'au moins deux des signaux.
